# EUROPEAN PATENT SPECIFICATION

(11) **EP 0 586 326 B1**
(45) Date of publication and mention of the grant of the patent: **08.01.1997**
(21) Application number: 93610048.6
(22) Date of filing: 30.08.1993
(51) Int. Cl.: F16H 25/24

(54) **Linear actuator**
Linearantrieb
Entraînement linéaire

(30) Priority: 01.09.1992 DK 1085/92
(43) Date of publication of application: 09.03.1994
(73) Proprietor: LINAK A/S, DK-6430 Nordborg (DK)
(72) Inventor: Jensen, Bent, DK-6430 Nordborg (DK)
(74) Representative: Pedersen, Soeren Skovgaard

(56) References cited:
- EP-A- 0 048 978
- US-A- 4 984 657

## Description

The invention relates to a linear actuator according to the preamble of claim 1 with a driven spindle and a nut, in particular a circulating ball-nut spindle drive, connected to the push rod of the actuator. From US-A-4,984,657 a vehicle lift apparatus including such a linear actuator is known.

An actuator with circulating ball spindle and nut (also known as a ball screw with nut) is advantageous, inter alia because of the small friction. It is desirable in such a construction of an actuator that there is a precise indication of a worn-out nut in order that the actuator may be serviced in time and at the same time in order that the remaining construction is protected against consequent damage. When the circulating ball nut wears out, the balls typically are lost, and the transfer of power is disabled. This typically happens during a heavy load on the actuator whereby the push rod almost instantaneously moves to one extreme. Actuators of this kind are e.g. used in hospital beds for adjusting the parts in various positions. It would obviously create catastrophic consequences if a bed collapses under a patient without warning.

The above mentioned problem is solved by a linear actuator according to the characterising part of claim 1. In such a linear actuator a safety nut is disposed against the nut, and an intermediate plastic driving washer is disposed between the two nuts, the driving washer being supplied with projections which fit into holes in the respective nuts. When the nut is worn out the safety nut takes over the load and because of the greater friction of the safety nut against the cut thread, the nut will get stuck on the the spindle and participate in its rotation. The projections of the plastic driving washer will be cut by the force of rotation so that the connection between the two nuts is broken. During load the plastic washer will act as a sliding bearing between the two nuts. The actuator will, however, be able to return to its retracted position because the friction between the safety nut and the spindle is reduced when the spindle is reversed. The plastic driving washer is preferably supplied with two projections diametrically disposed but staggered on either side, preferably on diameters at right angles to each other. The holes in the nuts and the projections have a tight fit in order that the safety nut is securely retained at its predetermined distance from the nut. Furthermore the result of a worn out nut is a clean cut against the edges of the holes. The projections must at the same time have sufficient rigidity and be fairly easy to cut which is obtained by means of tubular projections. The projections engaging the nut are solid while the projections engaging the safety nut are hollow, whereby the plastic washer remains in fixed relationship to the worn-down nut when the projections engaging the safety nut are cut.

The invention will be explained in detail in the following with reference to the attached drawing which shows an embodiment of the actuator according to the invention in which preferably a drive of the circulating ball-nut spindle type is used. The drawing shows in
Fig. 1 a longitudinal section through the actuator, and in
Fig. 2 a section of the circulating ball spindle with the nut, plastic driving washer and safety nut in an exploded view.

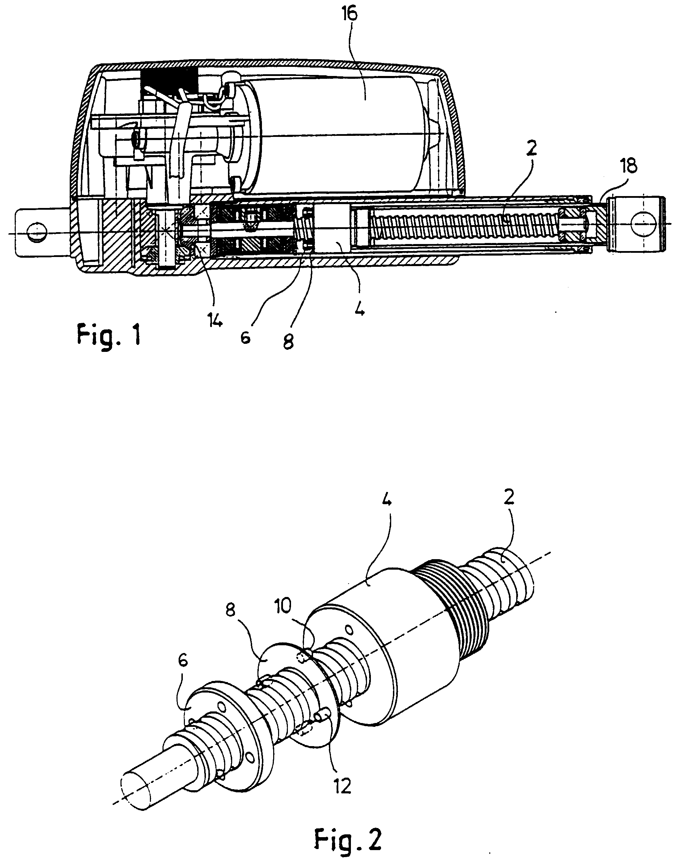

In Fig. 1 of the drawing is shown a linear actuator with a usual circulating ball spindle 2 with the cooperating nut 4, a safety nut 6 an a plastic driving washer 8. The circulating ball spindle is driven by a reversible electric motor 16 via a gear train 14. By the rotation of the spindle the circulating ball nut will move back and forth on the spindle dependent of its direction of rotation. The push rod 18 of the actuator is fitted to the circulating ball nut 4.

The safety nut 6 is disposed on the lower side of the circulating ball nut 4, i.e. the side facing the gear train 14. Between the two nuts 4 and 6 is disposed the plastic driving washer 8 which is a thin plastic ring carrying two solid projections 10 on one side which are fitted into corresponding holes in the circulating ball nut 4 and equally carrying two hollow projections 12 on the other side which are fitted into two corresponding holes in the safety nut 6.

When the actuator is in good repair the safety nut 6 will simply follow the circulating ball nut 4 at a fixed distance provided by the driving washer such that the safety nut does not touch the thread of the spindle. During an outward push by the push rod the circulating ball nut carries the load on the push rod while the safety nut is unloaded, and during a return movement the safety nut is equally unloaded.

When the circulating ball nut is worn out, i.e. when the force from the spindle can no longer be transmitted through balls to the nut, the safety nut engages the thread and takes over the load. The circulating ball nut will always fail during a maximum load, i.e. during an outward movement or at maximum extension or retraction. The safety nut will then be loaded by its engagement with the spindle. During this load the friction between the spindle and the nut will be so great that the nut participates in the rotation of the spindle, whereby the projections of the driving washer will break whereby the link between the two nuts is broken. The safety nut which due to the load and the ensuing friction is momentarily fixed to the spindle will only participate in its rotation while sliding on the plastic washer which acts as a bearing. Further attempts at activating the actuator to push will remain without result. The visible sign to the operator will be that things do not move. A natural reaction would be to attempt a return movement which will be successful because the engagement of the safety nut with the spindle is eased, allowing the safety nut to retract with the push rod. Further attempts at an outward movement will not succeed as before. If the push rod is fully retracted no further movement will be possible. By means of this construction simple, efficient means provide a visible sign for a need for servicing the actuator, without overloading the remaining construction or causing injury to the load.

## Claims

1. A linear actuator comprising a driven spindle (2) with a nut (4), preferably a circulating ball-nut spindle drive, connected to the the push of the actuator, wherein a safety nut (6) is disposed against the nut (4), and wherein an intermediate shear pin means (10, 12) is disposed between the two nuts, said shear pin means fits into holes in the respective nuts and connects the two nuts so that said safety nut (6) can follow the axial movement of the actuator as long as the nut (4) and spindle (2) are in good repair, whereby said shear pin means will fracture when said nut (4) and spindle (2) are in bad repair, characterized in that a plastic washer (8) is disposed between the two nuts, said plastic washer (8) is supplied with projections (10) on one side fitted into holes of the nut (4) and with projections (12) on the other side fitted into holes of the safety nut (6) and forming said shear pin means.

2. An actuator according to claim 1, characterized in that the driving washer (8) has two projections disposed diametrically opposed on either side and staggered, preferably at diameters which are at right angles to each other.

3. An actuator according to claim 1 or 2, characterized in that the projections engaging the safety nut (6) are tubular.

## Patentansprüche

1. Ein linearer Stellantrieb umfassend eine getriebene Spindel (2) mit einer Mutter (4), bevorzugt einer Drehkugelmutter-Spindelantrieb, der mit der Schubstange des Stellantriebes verbunden ist, wobei eine Sicherheitsmutter (6) gegen die Mutter (4) angeordnet ist, und wobei ein Zwischen-Scherstift-Mittel (10, 12) zwischen den zwei Muttern angeordnet ist, das Scherstift-Mittel in Löcher der jeweiligen Muttern papt und die zwei Muttern verbindet, so daß die Sicherheitsmutter (6) der axialen Bewegung des Stellantriebes folgen kann, solange die Mutter (4) und die Spindel (2) in gutem Zustand sind, wobei die Scherstift-Mittel brechen, wenn die Mutter (4) und die Spindel (2) in schlechtem Zustand sind, dadurch gekennzeichnet, daß eine Kunststoffscheibe (8) zwischen den beiden Muttern angeordnet ist, und diese Kunststoffscheibe (8) mit an einer Seite in die Löcher der Mutter (4) eingepaßten Vorsprüngen (10) und mit an der anderen Seite in die Löcher der Sicherheitsmutter (6) eingepaßten Vorsprüngen (12) versehen sind, die die Scherstift-Mittel bilden.

2. Ein Stellantrieb nach Anspruch 1, dadurch gekennzeichnet, daß die treibende Scheibe (8) zwei Vorsprünge aufweist, die diametral entgegengesetzt an jeder Seite angeordnet und versetzt sind, bevorzugt an Durchmessern, die zueinander im rechten Winkel liegen.

3. Ein Stellantrieb nach Anspruch 1 oder 2, dadurch gekennzeichnet, daß die Vorsprünge, die in Eingriff mit der Sicherheitsmutter (6) stehen, röhrenförmig sind.

## Revendications

1. Dispositif d'actionnement linéaire comprenant un arbre entraîné (2) ayant un écrou (4), de préférence un entraînement d'arbre à écrou à circulation de billes, relié à la tige de poussée du dispositif d'actionnement, dans lequel un écrou de sécurité (6) est disposé contre l'écrou (4), et dans lequel des moyens intermédiaires à goupilles de cisaillement (10,12) sont disposés entre les deux écrous, lesdits moyens à goupilles de cisaillement s'adaptent dans des trous dans les écrous respectifs et relient les deux écrous de sorte que ledit écrou de sécurité (6) peut suivre le mouvement axial du dispositif d'actionnement aussi longtemps que l'écrou (4) et l'arbre (2) sont en bon état, alors que lesdits moyens à goupilles de cisaillement se briseront quand lesdits écrou (4) et arbre (2) sont en mauvais état,
caractérisé en ce qu'une rondelle en plastique (8) est disposée entre les deux écrous, ladite rondelle en plastique (8) est pourvue de saillies (10) sur une face, agencées dans des trous de l'écrou (4), et de saillies (12) sur l'autre face, agencées dans des trous de l'écrou de sécurité (6), et formant lesdits moyens à goupilles de cisaillement.

2. Dispositif d'actionnement selon la revendication 1,
caractérisé en ce que la rondelle d'entraînement (8) présente deux saillies disposées de façon diamétralement opposée sur chaque face et décalées, de préférence sur des diamètres qui sont à angle droit l'un de l'autre.

3. Dispositif d'actionnement selon la revendication 1 ou 2,
caractérisé en ce que les saillies engageant l'écrou de sécurité (6) sont tubulaires.
